# EUROPÄISCHE PATENTSCHRIFT

(11) **EP 0 410 115 B1**
(45) Veröffentlichungstag und Bekanntmachung des Hinweises auf die Patenterteilung: **03.11.1993**
(21) Anmeldenummer: 90110534.6
(22) Anmeldetag: 02.06.1990
(51) Int. Cl.: B23B 31/16

(54) **Spanneinrichtung**
Chucking device
Mandrin

(30) Priorität: 28.07.1989 DE 3925018
(43) Veröffentlichungstag der Anmeldung: 30.01.1991
(73) Patentinhaber: SMW Schneider & Weisshaupt GmbH, 88074 Meckenbeuren (DE)
(72) Erfinder: Hiestand, Karl, D-7798 Pfullendorf (DE)
(74) Vertreter: Engelhardt, Guido, Dipl.-Ing.

(56) Entgegenhaltungen:
- DE-A- 2 949 567
- DE-A- 3 434 308

## Beschreibung

Die Erfindung bezieht sich auf eine Spanneinrichtung, insbesondere ein Spannfutter für Drehmaschinen, Spannstock oder dgl. mit radial verstellbar beispielsweise in einem Futterkörper geführten Grundbacken, die einzeln oder gemeinsam mit einem Antriebsglied in Verbindung stehen und in deren stirnseitige Verzahnung auswechselbare Aufsatzbacken eingreifen, die mit den zugeordneten Grundbacken Koppelbar, um mindestens der Höhe der ineinandergreifenden Backenverzahnungen axial verstellbar und in deren den Grundbacken zugekehrten Stirnseiten senkrecht zur Längsachse des Spannfutters oder des Spannstocks verlaufende Führungsnuten eingearbeitet sind.

Durch die DE-A- 29 49 567 ist ein Spannfutter dieser Art bekannt. Zur Koppelung der Spannbacken mit den Grundbacken dient hierbei jeweils ein Nutenstein, der in einer in den Grundbacken eingearbeiteten Aussparung axial verschiebbar eingesetzt ist und mit einem hammerkopfartig ausgebildeten Ende in die in den Spannbacken eingearbeitete Nut eingreift. Die Axialverschiebung des Nutensteins um die Höhe der ineinandergreifenden Backenverzahnungen wird mittels eines Spannstückes bewerkstelligt, das in einer in dem Grundbacken vorgesehenen Freisparung eingesetzt und durch eine ortsfest angeordnete Gewindespindel radial verschiebbar ist. Über Schrägflächen werden die Verstellbewegungen des Spannstückes auf den Nutenstein übertragen.

Abgesehen davon, daß diese Ausgestaltung bauaufwendig und somit teuer in der Herstellung ist, ist eine unmittelbare Verbindung des Spannbackens mit dem Grundbacken nicht gegeben. Diese sind vielmehr über den Nutenstein, das Spannstück sowie die Gewindespindel und demnach über mehrere in unterschiedlicher Weise verstellbare Glieder gekoppelt, so daß hohe Stabilität nicht gegeben und dadurch der Einsatzbereich dieses Spannfutters begrenzt ist. Auch ist ein Backenwechsel in kurzer Zeit, da die Verdrehbewegung der Verstellspindel in eine Axialbewegung umzulenken ist, nicht zu bewerkstelligen. Des weiteren ist der axiale Verstellweg der Nutensteine gering, die ineinandergreifenden Verzahnungen der Grund- und Spannbacken können daher ebenfalls keine hohen Kräfte übertragen, auch ist nur eine Innen- oder Außenspannung eines Werkstückes möglich.

Aufgabe der Erfindung ist es demnach, eine Spanneinrichtung der vorgenannten Gattung derart auszubilden, daß stets eine starre Verbindung der Aufsatzbacken mit den Grundbacken bewerkstelligt ist, daß aber dennoch die Aufsatzbacken in kurzer Zeit und auf sehr einfache Weise durch eine parallele Verschiebung leicht ausgewechselt werden können. Des weiteren sollen der Bau- und Fertigungsaufwand gering gehalten werden, auch soll ein Backenwechsel, ohne daß Schrauben gelöst werden müssen, problemlos vorzunehmen sein. Vor allem aber soll erreicht werden, daß eine hohe Stabilität der Verbindung sowie ein großer radialer Verstellbereich der Aufsatzbacken gegeben sind, so daß auch außerordentlich hohe Spannkräfte ohne Schwierigkeiten auf ein zwischen den Aufsatzbacken eingespanntes Werkstück übertragen werden können. Auch sollten Innen- und Außenspannungen eines Werkstückes ohne weiteres möglich sein.

Gemäß der Erfindung wird diese Aufgabe bei der eingangs genannten Spannvorrichtung dadurch gelöst, daß zur Koppelung der Aufsatzbacken mit den Grundbacken jeweils eine einstückig ausgebildete Spannleiste vorgesehen ist, die in der Führungsnut des Aufsatzbackens und einer in dem Grundbacken vorgesehenen geneigt zur Längsachse des Spannfutters oder des Spannstockes gerichteten Führungsnut mittels Hinterschneidungen axial abgestützt und in den Führungsnuten radial verschiebbar geführt ist, und daß zur Radialverstellung der Spannleiste ein in den Grundbacken eingesetzter Verstellbolzen vorgesehen ist, der parallel zu der geneigt verlaufenden Führungsnut des Grundbackens angeordnet ist und über eine oder mehrere Hinterschneidungen mit der Spannleiste in Triebverbindung steht.

Zweckmäßig ist es hierbei, die Führungsnuten der Grundbacken und der Aufsatzbacken im Querschnitt T-förmig mit zur Mitte senkrecht gerichteten oder geneigt verlaufenden die Hinterschneidungen bildenden Anlageflächen auszubilden und die Spannleiste mit einem den Querschnitten der Führungsnuten angepaßten doppel-T-förmigen Querschnitt zu versehen.

Der Verstellbolzen kann in einfacher Weise in einer in den Grundbacken eingearbeiteten mit einem Innengewinde versehenen Bohrung verstellbar gehalten werden, wobei zu dessen Betätigung in der radial nach außen gerichteten Stirnfläche eine Schlüsselöffnung oder ein Betätigungsprofil für einen Schraüber eingearbeitet sein sollte.

Die Hinterschneidungen des Verstellbolzens können in vorteilhafter Weise durch einen oder mehrere in Achsrichtung hintereinander angeordnete und von diesen abstehende mit achssenkrecht verlaufenden Anlageflächen versehene Bunde oder einem Kopf gebildet werden, die in angepaßte in die Spannleiste eingearbeitete Ausnehmungen eingreifen. Es ist aber auch möglich, die Hinterschneidungen durch eine oder mehrere in den Verstellbolzen eingearbeitete mit senkrecht zu dessen Längsachse verlaufenden Anlageflächen versehenen Ringnuten zu bilden, in die angepaßte von der Spannleiste abstehende Vorsprünge eingreifen.

Die in den Grundbacken eingearbeitete Führungsnut der Spanngleiste sowie die Längsachse des Verstellbolzens sollten parallel zueinander jeweils gegenüber der Lotrechten zur Längsachse des Spannfutters unter einem Winkel α von vorzugsweise 10 bis 20° in Richtung der Aufsatzbacken geneigt verlaufend angeordnet sein.

Um eine hohe Steifigkeit der Verbindung zu erzielen, sollte die Spannleiste in ihrer Längserstreckung derart bemessen sein, daß diese eine Länge von mindestens zwei Drittel der Höhe der Grundbacke aufweist.

Angebracht ist es des weiteren, zur Überwachung der Verstellbewegung des Verstellbolzens und/oder der Spannleiste diesen jeweils einen Näherungsschalter oder dgl. zuzuordnen, die unmittelbar oder über Zwischenglieder in Endstellung des Verstellbolzens und/oder der Spannleiste durch diese betätigbar sind.

Wird eine Spanneinrichtung gemäß der Erfindung ausgebildet, so ist es nicht nur möglich, die Aufsatzbacken beispielsweise bei einem Spannfutter für Drehmaschinen in sehr kurzer Zeit mit den Grundbacken zu koppeln oder diese Verbindung zu lösen, sondern es ist auch eine äußerst hohe Stabilität der Grundbacken-Aufsatzbacken-Einheit gegeben, so daß sehr hohe Spannkräfte ohne Schwierigkeiten übertragen werden können. Wird nämlich zur Koppelung der Aufsatzbacken mit den Grundbacken einer radial mittels eines Verstellbolzens in Führungsnuten verstellbare Spannleiste vorgesehen, die unmittelbar in die miteinander zu verbindenden Backen eingreift und mittels der durch eine radiale Verschiebung auch eine axial gerichtete Verstellung der Aufsatzbacken bewerkstelligt wird, so werden die Grund- und Aufsatzbacken durch hohe örtliche Beanspruchungen nicht aufgebogen, die auftretenden Kräfte werden vielmehr auf großen Flächen abgestützt, so daß eine in sich starre Verbindung gegeben ist. Des weiteren ermöglicht die vorschlagsgemäße Koppelung eine große axiale Verstellbarkeit der Aufsatzbacken, die ineinandergreifenden Verzahnungen, um deren Höhe diese axial verstellbar sein müssen,um ausgetauscht werden zu können, können somit auch zur Übertragung hoher Spannkräfte ausgelegt werden.

Und da mittels des Verstellbolzens die Spannleiste unmittelbar betätigbar ist, ist die Verbindung zwischen den Aufsatzbacken und den Grundbacken auch in kurzer Zeit zu lösen oder herzustellen. Ferner ist von Vorteil, daß die Aufsatzbacken, zumal in diese keine Befestigungsschrauben eingesetzt sind, nahezu völlig ausgenutzt und somit ausgedreht werden können und daß die einzelnen Bauteile, da in diese jeweils nur geradflächige Führungsnuten oder Eindrehungen einzuarbeiten sind, auf einfache Weise und wirtschaftlich herzustellen sind. Des weiteren ist die vorschlagsgemäße Spanneinrichtung sowohl für die Innenspannung als auch für die Außenspannung eines Werkstückes in vorteilhafter Weise verwendbar.

In der Zeichnung ist ein Ausführungsbeispiel einer erfindungsgemäßen, als Spannfutter für Drehmaschinen ausgebildeten Spanneinrichtung dargestellt, das nachfolgend im einzelnen erläutert ist. Hierbei zeigt:
- Figur 1: das mit auswechselbaren Aufsatzbacken versehene Spannfutter in einem Axialschnitt,
- Figur 2: einen Schnitt nach der Linie II - II der Figur 1 während eines Auswechselvorganges und
- Figur 3: das Spannfutter nach Figur 1 mit zusätzlich vorgesehenen Überwachungselementen.

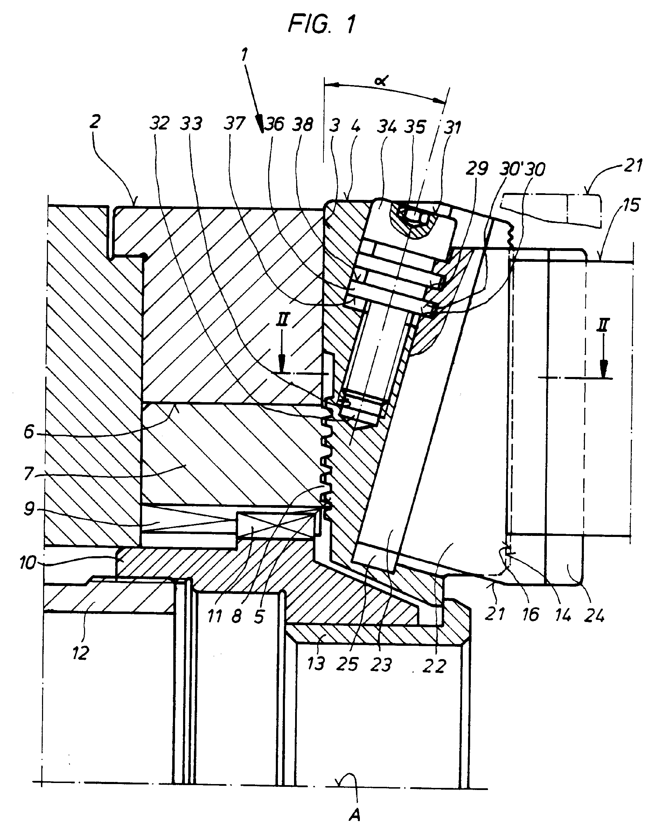

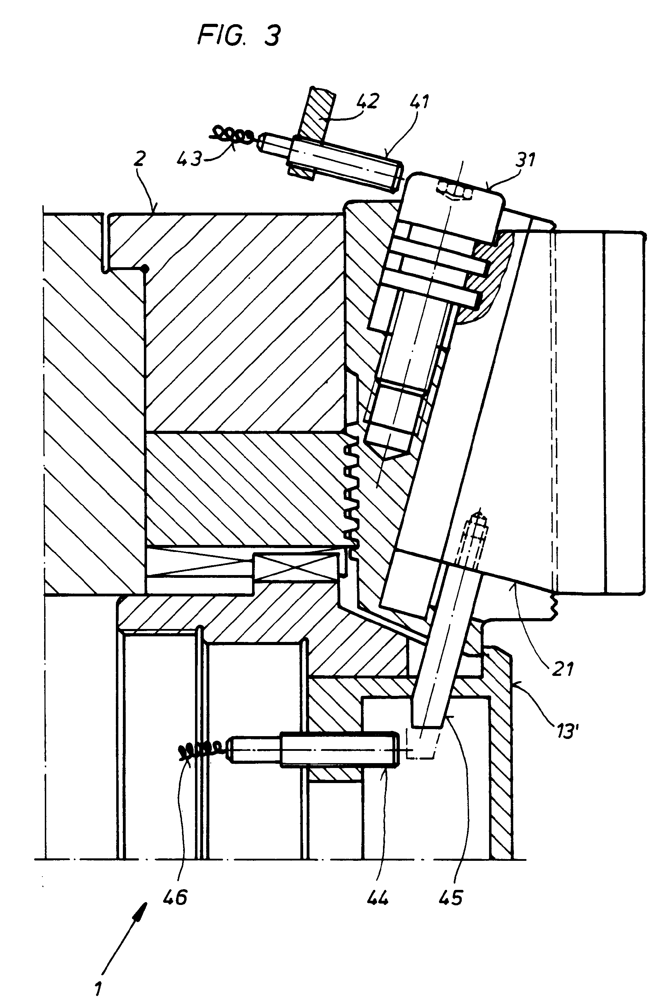

Das in den Figuren 1 und 3 dargestellte und mit 1 bezeichnete Spannfutter besteht im wesentlichen aus einem zweiteiligen Futterkörper 2, in diesen in radial gerichtete Nuten 3 verschiebbar eingesetzte Grundbacken 4, die mittels in Ausnehmungen 6 angeordneter Keilstangen 7 als Antriebsglieder betätigbar sind, sowie Aufsatzbacken 15, die auswechselbar mit den Grundbacken 4 gekoppelt sind. Zur Verstellung der Keilstangen 7 ist ein gemeinsames Verstellglied 10 vorgesehen, das mittels Keilflächen 11 auf an den Keilstangen 7 angearbeiteten Keilflächen 8 einwirkt und über eine eingeschraubte axial verschiebbare Zugstange 12 von einer mit dieser verbundenen nicht dargestellten Servoeinrichtung verstellbar ist. Bei einer Axialverschiebung des Verstellgliedes 10 werden somit die Keilstangen 7 in Umfangsrichtung verstellt und durch diese werden die Grundbacken 4, die über eine Verzahnung 5 in eine an den Keilstangen 7 angebrachte Verzahnung 8 eingreifen, radial nach innen oder außen verschoben. Durch eine Buchse 13 sind die in den Futterkörper 2 eingearbeiteten Nuten 3 innen abgedeckt.

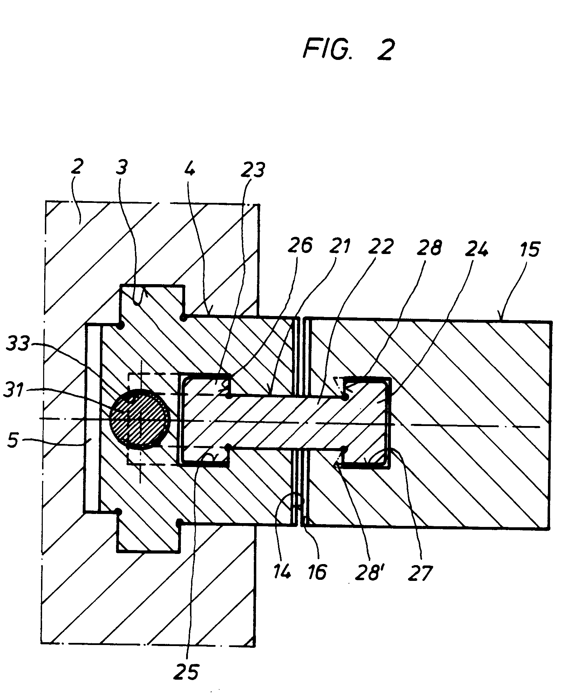

Zur Koppelung der Aufsatzbacken 15 mit den Grundbacken 4 dient jeweils eine Spannleiste 21, die radial verschiebbar in einer in die Grundbacken 4 eingearbeiteten Führungsnut 25, die unter einem Winkel α von beispielsweise 15° gegenüber der Lotrechten zur Längsachse A des Spannfutters 1 in Richtung der Aufsatzbacken 15 geneigt verläuft, sowie einer in die Aufsatzbacken 15 eingearbeiteten senkrecht zur Längsachse A des Spannfutters 1 angeordnete Führungsnut 27 eingesetzt und gehalten ist. Die Führungsnuten 25 und 27 sind hierbei mit Hinterschneidungen, die durch senkrecht zur Mitte verlaufende Anlageflächen 26 bzw. 28 gebildet sind, versehen und die Spannleiste 21 weist einen angepaßten doppel-T-förmigen Querschnitt auf. Die von einem Mittelsteg 22 abstehenden Querstege 23 und 24 der Spannleiste 21 sind somit in den Führungsnuten 25 und 27 auf großen Flächen abgestützt. Selbstverständlich können die Hinterschneidungen aber auch, wie dies strichpunktiert in Figur 2 eingezeichnet ist, durch geneigt verlaufende Anlageflächen 28' gebildet sein.

Die Radialverstellung der Spannleiste 21 erfolgt mittels eines Verstellbolzens 31, der in einer mit einem Innengewinde 33 versehenen und in den Grundbacken 4 eingearbeiteten parallel zu dessen Führungsnut 25 verlaufenden Bohrung 32 eingesetzt ist. In den Kopf 34 des Verstellbolzens 31 ist eine Schlüsselöffnung 35 eingearbeitet, außerdem sind an dem Verstellbolzen 31 mehrere axial hintereinander angeordnete Bunde 36 angebracht, die achssenkrecht verlaufende Anlageflächen 37 und 38 aufweisen. Und die Spannleiste 21 ist mit entsprechend gestalteten Ausnehmungen 29 versehen, an deren geneigt zur Längsachse A des Spannfutters 1 verlaufenden Abstützflächen 30 und 30' die Anlageflächen 37 und 38 des Verstellbolzens 31 anliegen.

Wird bei dem Spannfutter 1 in der in Figur 1 dargestellten Betriebsstellung der Verstellbolzen 31 mittels eines in dessen Schlüsselöffnung 35 einzusetzenden Werkzeuges derart verdreht, daß dieser nach außen verstellt wird, so wird von dem Verstellbolzen 31, da dessen Anlageflächen 38 auf die Stützflächen 29 der Spannleiste 21 einwirken, diese mitgenommen und somit ebenfalls radial nach außen verstellt. Die Spannleiste 21 wird dabei aber auch, da die in den Grundbacken 4 eingearbeitete Führungsnut 25 unter dem Winkel α geneigt angeordnet ist, in Richtung der Längsachse A des Spannfutters 1 nach rechts verschoben. Und ist eine axiale Verschiebung um die Wegstrecke S erreicht - in Figur 1 ist dieser Betriebszustand dargestellt -, die mindestens der Höhe der auf den einander zugekehrten Stirnseiten der Grundbacken 4 und der Aufsatzbacken 15 eingearbeiteten ineinandergreifenden Verzahnungen 14 und 16 entspricht, so kann die Aufsatzbacke 15 radial auf der Spannleiste 21 nach innen oder außen geschoben und somit von diesem abgenommen werden. Nach Aufsetzen einer anderen Aufsatzbacke auf den Quersteg 24 der Spannleiste 21 und Eindrehen des Verstellbolzens 31 - die Spannleiste 21 wird dabei durch die auf die Stützflächen 30 einwirkenden Anlageflächen 37 der Bunde 36 mitgenommen - wird die starre Verbindung zwischen dem Grundbacken 4 und dem Aufsatzbacken 15 wiederum hergestellt.

Gemäß Figur 3 können dem Verstellbolzen 31 und/oder der Spannleiste 21 Näherungsschalter 41 bzw. 44 zugeordnet sein, um die Endstellungen überwachen zu können. Eine vorzeitige Inbetriebnahme der das Spannfutter 1 tragenden Werkzeugmaschine ist auf diese Weise zuverlässig auszuschließen.

Der in einer ortsfesten Halterung 42 eingesetzte über eine Signalleitung 43 mit der Maschinensteuerung verbundene Näherungsschalter 41 ist hierbei unmittelbar von dem Verstellbolzen 31, sobald dieser herausgeschraubt ist, beeinflußbar, zur Betätigung des ebenfalls über eine Signalleitung 46 an die Maschinensteuerung angeschlossenen Näherungsschalters 44 ist dagegen an der Spannleiste 21 ein Signalgeber 45 angebracht, der die Buchse 13' durchgreift und mit dem in dieser angeordneten Näherungsschalter 44 zusammenwirkt.

## Patentansprüche

1. Spanneinrichtung, insbesondere Spannfutter (1) für Drehmaschinen, Spannstock oder dgl. mit radial verstellbar beispielsweise in einem Futterkörper (2) geführten Grundbacken (4), die einzeln oder gemeinsam mit einem Antriebsglied in Verbindung stehen und in deren stirnseitige Verzahnung (14) auswechselbare Aufsatzbacken (15) eingreifen, die mit den zugeordneten Grundbacken (4) koppelbar, um mindestens der Höhe der ineinandergreifenden Backenverzahnungen (14,16) axial verstellbar und in deren den Grundbacken (4) zugekehrten Stirnseiten senkrecht zur Längsachse des Spannfutters (1) oder des Spannstockes verlaufende Führungsnuten (27) eingearbeitet sind,
**dadurch gekennzeichnet,**
daß zur Koppelung der Aufsatzbacken (15) mit den Grundbacken (4) jeweils eine einstückig ausgebildete Spannleiste (21) vorgesehen ist, die in der Führungsnut (27) des Aufsatzbackens (15) und einer in dem Grundbacken (4) vorgesehenen geneigt zur Längsachse (A) des Spannfutters (1) oder des Spannstockes gerichteten Führungsnut (25) mittels Hinterschneidungen (Flächen (28, 28' bzw. 26) axial abgestützt und in den Führungsnuten (25, 27) radial verschiebbar geführt ist, und daß zur Radialverstellung der Spannleiste (21) ein in den Grundbacken (4) eingesetzter Verstellbolzen (31) vorgesehen ist, der parallel zu der geneigt verlaufenden Führungsnut (25) des Grundbackens (4) angeordnet ist und über eine oder mehrere Hinterschneidungen (Kopf 34, Bund 36) mit der Spannleiste (21) in Triebverbindung steht.

2. Spanneinrichtung nach Anspruch 1,
**dadurch gekennzeichnet**,
daß die Führungsnuten (25, 27) der Grundbacken (4) und der Aufsatzbacken (15) im Querschnitt T-förmig mit zur Mitte senkrecht gerichteten oder geneigt verlaufenden die Hinterschneidungen bildenden Anlageflächen (26, 28) ausgebildet sind und daß die Spannleiste (21) einen den Querschnitten der Führungsnuten (25, 27) angepaßten doppel-T- förmigen Querschnitt aufweist.

3. Spanneinrichtung nach Anspruch 1 oder 2,
**dadurch gekennzeichnet**,
daß der Verstellbolzen (31) jeweils in einer in den Grundbacken (4) eingearbeiteten mit einem Innengewinde (33) versehenen Bohrung (32) verstellbar gehalten ist.

4. Spanneinrichtung nach Anspruch 3,
**dadurch gekennzeichnet,**
daß zur Betätigung des Verstellbolzens (31) in dessen radial nach außen gerichteter Stirnfläche (Kopf 34) eine Schlüsselöffnung (35) oder ein Betätigungsprofil für einen Schraüber eingearbeitet ist.

5. Spanneinrichtung nach Anspruch 3 oder 4,
**dadurch gekennzeichnet**,
daß der Verstellbolzen (31) als Kopfschraube ausgebildet ist.

6. Spanneinrichtung nach einem oder mehreren der Ansprüche 1 bis 5,
**dadurch gekennzeichnet**,
daß die Hinterschneidungen des Verstellbolzens (31) durch einen oder mehrere in Achsrichtung hintereinander angeordnete und von diesem abstehende mit achssenkrecht zu dem Verstellbolzen (31) verlaufenden Anlageflächen (37, 38) versehene Bunde (36) oder einen Kopf (34) gebildet sind, die in angepaßte in die Spannleiste (21) eingearbeitete Ausnehmungen (29) eingreifen.

7. Spanneinrichtung nach einem oder mehreren der Ansprüche 1 bis 6,
**dadurch gekennzeichnet**,
daß die Hinterschneidungen des Verstellbolzens (31) durch eine oder mehrere in diesen eingearbeitete mit senkrecht zu dessen Längsachse verlaufenden Anlageflächen versehene Ringnuten gebildet sind, in die angepaßte von der Spannleiste (21) abstehende Vorsprünge eingreifen.

8. Spanneinrichtung nach einem oder mehreren der Ansprüche 1 bis 7,
**dadurch gekennzeichnet**,
daß die in den Grundbacken (4) eingearbeitete Führungsnut (25) der Spannleiste (21) sowie die Längsachse des Verstellbolzens (31) parallel zueinander jeweils gegenüber der Lotrechten zur Längsachse (A) des Spannfutters (1) unter einem Winkel α von vorzugsweise 10 bis 20° in Richtung der Aufsatzbacken (15) geneigt verlaufend angeordnet sind.

9. Spanneinrichtung nach einem oder mehreren der Ansprüche 1 bis 8,
**dadurch gekennzeichnet**,
daß die Spannleiste (21) in ihrer Längserstreckung derart bemessen ist, daß diese eine Länge von mindestenst zwei Drittel der Höhe der Grundbacke (4) aufweist.

10. Spanneinrichtung nach einem oder mehreren der Ansprüche 1 bis 9,
**dadurch gekennzeichnet**,
daß zur Überwachung der Verstellbewegungen des Verstellbolzens (31) und/oder der Spannleiste (21) diesen jeweils ein Näherungsschalter (41, 44) oder dgl. zugeordnet ist, die unmittelbar oder über Zwischenglieder (45) in Endstellung des Verstellbolzens (31) und/oder der Spannleiste (21) durch diese betätigbar sind.

## Claims

1. Chucking device, in particular a chuck (1) for turning machines, vice or similar with radially adjustable primary jaws (4) which are, for example, mounted within a chuck body (2) and which are individually or collectively connected to a driving element, whereby replaceable fixture jaws (15) mesh with the face end gearing (14) on the primary jaws (4), and the fixture jaws (15) may be connected to the appropriate individual primary jaws (4) and may be axially adjusted through a distance of at least the height of the intermeshing jaw gearing sections (14, 16), with guide grooves (27) running vertically to the longitudinal axis of the chuck (1) or vice which are formed into the face ends of the fixture jaws (15) which face the primary jaws (4),
**characterized in that,**
in order to connect the fixture jaws (15) to the primary jaws (4), a one-piece clamping bar (21) is provided for each connection and is inserted in a guide groove (25) in each fixture jaw (15) and also in a guide grove (27) provided at an inclined angle to the longitudinal axis (A) of the chuck (1) or vice, with the clamping bar (21) axially supported by means of undercuts (surfaces 28, 28' or 26) and radially moveable within the guide grooves (25, 27), and in that in order to move the clamping bar (21) radially, an adjusting bolt (31) is inserted in the primary jaws (4) and is positioned in parallel to the angled guide groove (25) of each primary jaw (4) and is drivably connected to the clamping bar (21) by means of one or more undercuts (head 34, collar 26).

2. Chucking device in accordance with Claim 1,
**characterized in that,**
the guide grooves (25, 27) of the primary jaws (4) and the fixture jaws (15) have a T-shaped cross-section with the contact surfaces (26, 28) which form the undercuts located at a perpendicular angle to the centre or extending at an inclined angle, and in that the clamping bar (21) demonstrates a twin T-shaped cross-section which is adapted to the cross-sections of the guide grooves (25, 27).

3. Chucking device in accordance with Claim 1 or 2,
**characterized in that,**
the adjusting bolt (31) is movably held in a bore (32) provided with an internal thread (33) which is shaped into the primary jaws (4).

4. Chucking device in accordance with Claim 3,
**characterized in that,**
a key opening (35) or actuation profile for a wrench is shaped into the face end of the adjusting bolt (31) which points radially outwards in order that the adjusting bolt (31) may be actuated.

5. Chucking device in accordance with Claim 3 or 4,
**characterized in that,**
the adjusting bolt (31) is produced as a bolt with a head.

6. Chucking device in accordance with one or more of Claims 1 to 5,
**characterized in that,**
the undercuts of the adjusting bolt (31) are produced by means of one or more collars (36) located one following the other in an axial direction and protruding from the adjusting bolt (31) and provided with contact faces (37, 38) which are axially perpendicular to the adjusting bolt (31), or else produced by a head (34), and in that the collars (36) engage in appropriately shaped notches (29) formed into the clamping bar (21).

7. Chucking device in accordance with one or more of Claims 1 to 6,
**characterized in that,**
the undercuts of the adjusting bolt (31) are produced by means of one or more annular grooves which are formed into the adjusting bolt (31) and which possess contact faces running at a perpendicular angle to the longitudinal axis of the adjusting bolt (31), and in that the suitably shaped projections of the clamping bar (21) engage in the annular grooves.

8. Chucking device in accordance with one or more of Claims 1 to 7,
**characterized in that,**
the guide groove (25) of the clamping bar (21) which is shaped into the primary jaws (4), and the longitudinal axis of the adjusting bolt (31) are located in parallel to each other, and are positioned running inclined in the direction of the fixture jaws (15) at an angle α to the perpendicular plane of the longitudinal axis (A) of the chuck (1), where in a preferred embodiment, angle α is between 10 to 20°.

9. Chucking device in accordance with one or more of Claims 1 to 8,
**characterized in that,**
the longitudinal elongation of the clamping bar (21) is of such an extent that the clamping bar (21) has a length of at least two thirds of the height of the primary jaw (4).

10. Chucking device in accordance with one or more of Claims 1 to 9,
**characterized in that,**
in order to monitor the adjusting movements of the adjusting bolt (31) and/or the clamping bar (21), these items are each allocated a proximity switch (41, 44) or similar, which may be actuated either directly or by means of intermediate elements (45) by the adjusting bolt (31) and/or the clamping bar (21) in their end positions.

## Revendications

1. Dispositif de serrage, notamment un mandrin de serrage (1) pour tours, blocs de serrage ou un équipement semblable, avec mors de base (4) radialement déplaçables et guidés p. ex. dans un corps de mandrin (2), liés individuellement ou ensemble avec un organe d'entraînement, et dans la denture frontale (14) desquels s'engrènent des mors rapportés remplaçables (15) qui se laissent accoupler aux mors de base (4) correspondants, qui se laissent déplacer axialement au moins sur la hauteur des dentures des mors (14, 16) s'engrenant, et dont les faces frontales donnant sur les mors de base (4) comportent des rainures de guidage (27) perpendiculaires à l'axe longitudinal du mandrin de serrage (1) ou du bloc de serrage,
caractérisé par le fait
que pour l'accouplement des mors rapportés (15) aux mors de base (4) il soit prévu respectivement une réglette de serrage (21) monopièce portant axialement au moyen de contre-dépouilles (plans 28, 28' ou 26) dans la rainure de guidage (27) du mors rapporté (15) et dans une rainure de guidage (25) prévue dans le mors de base (4) et inclinée par rapport à l'axe longitudinal (A) du mandrin de serrage (1) ou du bloc de serrage, et se laisse déplacer radialement dans les rainures de guidage (25, 27), et que pour l'ajustement radial de la réglette de serrage (21) il soit inséré dans le mors de base (4), un boulon de serrage (31) disposé parallèlement à la rainure de guidage (25) inclinée du mors de base (4) et lié par une ou plusieurs contre-dépouilles (tête 34, collet 36) avec la réglette de serrage (21).

2. Dispositif d'après la revendication 1,
caractérisé par le fait
que les rainures de guidage (25, 27) des mors de base (4) et des mors rapportés (15) soient conçus avec une section transversale en T et avec des plans de portée (26, 28) perpendiculaires ou inclinées vers le centre et formant les contre-dépouilles, et que la réglette de serrage (21) comprenne une section en double T, adaptée aux sections transversales des rainures de guidage (25, 27).

3. Dispositif d'après la revendication 1 ou 2,
caractérisé par le fait
que le boulon de réglage (31) soit logé dans un taraudage (32) muni d'un filetage intérieur (33) qui est pratiqué dans les mors de base (4) respectif.

4. Dispositif d'après la revendication 3,
caractérisé par le fait
que pour l'actionnement du boulon de réglage (31), il soit pratiqué dans sa face radiale extérieure (tête 34) une ouverture pour une clé (35) ou un profil d'attaque pour un tournevis.

5. Dispositif d'après la revendication 3 ou 4,
caractérisé par le fait
que le boulon de réglage (31) soit conçu en tant que vis à tête.

6. Dispositif d'après une ou plusieurs des revendications 1 à 5,
caractérisé par le fait
que les contre-dépouilles du boulon de réglage (31) soient formées par un ou plusieurs collets (36) saillants, disposés d'affilée en direction axiale et munis de faces de portée (37, 38) perpendiculaires au boulon de réglage (31), ou une tête (34), et qui s'engrènent dans des évidements (29) adaptés et pratiqués dans la réglette de serrage (21).

7. Dispositif d'après une ou plusieurs des revendications 1 à 6,
caractérisé par le fait
que les contre-dépouilles du boulon de réglage (31) soient formées par une ou plusieurs gorges annulaires intégrées et munies de faces de portée perpendiculaires à leur axe longitudinal, dans lesquelles s'engrènent des saillies adaptées sur la réglette de serrage (21).

8. Dispositif d'après une ou plusieurs des revendications 1 à 7,
caractérisé par le fait
que la rainure de guidage (25) de la réglette de serrage (21), pratiquée dans les mors de base (4) ainsi que l'axe longitudinal du boulon de réglage (31) soient parallèles et inclinés, par rapport à la ligne perpendiculaire sur l'axe longitudinal (A) du mandrin (1), à un angle de préférence de 10 à 20° en direction des mors rapportés (15).

9. Dispositif d'après une ou plusieurs des revendications 1 à 8,
caractérisé par le fait
que la longueur de la réglette de serrage (21) en direction longitudinale s'élève à au moins deux tiers de la hauteur du mors de base (4).

10. Dispositif d'après une ou plusieurs des revendications 1 à 9,
caractérisé par le fait
que pour la surveillance des mouvements du boulon de réglage (31) et/ou de la réglette de serrage (21), il leur soit assigné respectivement un contacteur de proximité (41, 44) ou un dispositif similaire, actionnés directement ou via des organes intermédiaires (45) en position extrême du boulon de réglage (31) et/ou de la réglette de serrage (21).
